Europäisches Patentamt

European Patent Office

Office européen des brevets

(19)

(11) Veröffentlichungsnummer: **0 111 133**
**B1**

(12) **EUROPÄISCHE PATENTSCHRIFT**

(45) Veröffentlichungstag der Patentschrift:
14.01.87

(51) Int. Cl.⁴: **C 01 B 15/023, B 01 J 10/00**

(21) Anmeldenummer: **83110729.7**

(22) Anmeldetag: **27.10.83**

(54) Kontinuierliches Verfahren zur Herstellung von Wasserstoffperoxid nach dem Anthrachinonverfahren.

(30) Priorität: 09.11.82 US 440347

(43) Veröffentlichungstag der Anmeldung:
20.06.84 Patentblatt 84/25

(45) Bekanntmachung des Hinweises auf die Patenterteilung:
14.01.87 Patentblatt 87/3

(84) Benannte Vertragsstaaten:
AT BE CH DE FR GB IT LI SE

(56) Entgegenhaltungen:
EP-A-0 017 013
DE-C-740 674
DE-C-743 660
DE-C-1 542 069

(73) Patentinhaber: Degussa Aktiengesellschaft,
Weissfrauenstrasse 9, D-6000 Frankfurt am Main
1 (DE)

(72) Erfinder: Kunkel, Wolfgang, Dr. Dipl.- Chem.,
Goethestrasse 58a, D-8752 Kleinostheim (DE)
Erfinder: Kemnade, Jörg, Dr. Dipl.- Ing.,
Altenhainer Strasse 21a, D-6233 Kelkheim-
Fischbach (DE)
Erfinder: Schneider, Dietrich, Dr. Dipl.- Ing., Im
Bachgrund 2b, D-6079 Buchschlag (DE)

## Beschreibung

Die vorliegende Erfindung betrifft ein Verfahren zur Durchführung der Hydrierung im Anthrachinonverfahren zur Herstellung von Wasserstoffperoxid.

Bekanntlich wird bei dem genannten Anthrachinon- oder AO-Verfahren (siehe hierzu zusammenfassende Darstellung in Ullmanns Encyklopädie der techn. Chemie, 4. neubearbeitete und erweiterte Auflage, Ed. 17, Seite 697 - 704) ein Anthrachinonderivat, der Reaktionsträger, in einem Lösungsmittel oder Lösungsmittelgemisch gelöst, und die so erhaltene Arbeitslösung in Gegenwart eines Katalysators hydriert. Dabei wird ein Teil des Anthrachinonderivates in das entsprechende Anthrahydrochinonderivat überführt. Nach Abfiltration des Hydrierkatalysators wird die Arbeitslösung mit Sauerstoff oder einem sauerstoffhaltigen Gas (meist Luft) begast, wobei unter Bildung von Wasserstoffperoxid das Anthrachinonderivat zurückgebildet wird.

Nach Extraktion des in der Arbeitslösung gelösten Wasserstoffperoxids mit Wasser kann die Arbeitslösung wieder der Hydrierstufe zugeführt werden. Durch ständige Wiederholung der Einzelvorgänge gelangt man so zu einem Kreisprozess, aus dem aus den Gasen Wasserstoff und Sauerstoff Wasserstoffperoxid synthetisiert wird.

Bei der Hydrierung wird der Katalysator im allgemeinen als Festbett- oder als Suspensions-Katalysator eingesetzt. Während bei Reaktoren mit Festbett-Katalysatoren der Katalysator auf einem Träger aufgebracht ist, können bei Verwendung von Suspensions-Katalysatoren diese Katalysatoren sowohl mit einem Trägerkontakt wie auch ohne Träger im Reaktor vorhanden sein.

Die in der Literatur beschriebenen Ausführungsformen dieser sog. Niederdruck-Hydrierreaktoren sind meist Rührkessel-Reaktoren, bei denen durch intensives Rühren sowohl der Katalysator in Schwebe gehalten als auch die Gasphase zerteilt wird (Chem.Ing.-Tech. 52, 1980, 3).

Weiterhin sind sog. Doppelrohr-Schlaufenreaktoren bekannt, bei denen der Wasserstoff mittels eines Treibstrahls eingemischt wird, wodurch eine Umwälzströmung erzeugt wird, die den Katalysator in Schwebe halten soll. Der in der Literatur beschriebene Schlaufenreaktor (Chem. Engng.Progr. 76, 1980, 6) beruht auf dem Prinzip der Einmischung der Gasphase mittels einer Strahldüse, wobei die Flüssigkeit über einen Primärkreislauf umgewälzt wird.

Diese bekannten Reaktoren haben alle den Nachteil, dass der Wasserstoff in der Flüssigkeit bei einmaligem Durchgang nicht vollständig abreagiert und deshalb rezykliert werden muss.

In der DE-Patentschrift 15 42 089 wird deshalb ein Reaktor vorgeschlagen, der mit abwechselnd dicken und dünnen Rohren ausgerustet ist, wobei die aufwärts führenden engen Rohre mit einer Geschwindigkeit von 1,5 bis 3 m/s durchströmt werden sollen. Es wird davon ausgegangen, dass durch die Beschränkung der Geschwindigkeit auf max. 3 m/s in den dünnen Rohren sog. "Schleif- und Zerreibkräfte" vermieden werden.

Die wiederkehrenden Rohrverengungen bzw.-erweiterungen sollen eine gute Einmischung des Wasserstoffs in die Flüssigphase bewirken, so dass man glaubte, auf spezielle Gaszerteiler oder Gaseinleitapparate verzichten zu können.

Gerade bei grösseren Rohrdurchmessern (> 100 mm) tritt jedoch an den Rohrerweiterungen eine Phasentrennung Gas/Flüssigkeit auf, die die Funktion des Reaktors durch ein Abreissen der Strömung völlig in Frage stellen kann; dieses wurde nicht berücksichtigt.

Nach der Darstellung in der DE-Patentschrift 15 42 089 sollen die dort beschriebenen Betriebsbedingungen und die durch sie erhoffte gute Durchmischung von Gas, Flüssigkeit und Suspensions-Katalysator die volle Aktivität des Katalysators entwickeln.

Dieser Annahme liegt die Vorstellung zugrunde, dass der für die spez. Umsatzrate geschwindigkeitsbestimmende Schritt im Stoffübergang Gas/Flüssigkeit läge. Jedoch führten Versuche, die Katalysatorproduktivität (Mol Hydrochinon pro m .h) durch eine noch bessere Gasverteilung weiter zu erhöhen, d.h. den Umsatz zu steigern, zu keinem Erfolg.

Es hat sich nun gezeigt, dass entgegen der bisherigen Kenntnis, die Katalysatorproduktlvität erheblich gesteigert werden kann, wenn die Mikroturbulenz am Katalysator erhöht wird, da es überraschenderweise die Stofftransportvorgänge am Katalysator und nicht der Wasserstofftransport aus der Gasphase in die Flüssigphase sind, die die Katalysatorproduktivität beeinflussen.

Es wurde nun gefunden, dass sich in einem kontinuierlichen Gleichstromverfahren zur Durchführung der katalytischen Hydrierung mit Wasserstoff oder einem wasserstoffhaltigen Gas zur Herstellung von Wasserstoffperoxid im sog. Anthrachinonverfahren bei Temperaturen unter 100° C und Drucken unter 15 bar absolut düie Produktivität des Palladium-Mohr-Katalysators, der in der Arbeitslösung suspendiert ist und damit die Umsatzrate erhöhen läßt, wenn man die Hydrierung in einem Schlaufenreaktor aus Rohren gleicher Nennweite, die vertikal oder horizontal angeordnet und durch Rohrbügen verbunden sind, bei Strömungsgeschwindigkeiten in den Rohren von mehr als 3 m/sec$^{-1}$ vornimmt.

Bevorzugt wird bei Strömungsgeschüindigkeiten von 4 - 7 m/sec$^{-1}$ gearbeitet. Die Nennweitendurchmesser liegen zwischen 50 - und 1000 mm, bevorzugt bei 500 mm. Der Reaktionsraum ist bevorzugt langgestreckt, obwohl auch ein aus mehreren Rohren, die durch Rohrbögen miteinander verbunden sind, bestehender Reaktionsraum verwendet werden kann.

Die Gesamtlange, die so gewählt ist, dass keine Recyclierung des Wasserstoffs notwendig ist, und der Wasserstoff am Ende der Reaktionsstrecke ausreagiert hat, beträgt 15 - 150 m.

Zur Reduzierung der Grundfläche des Reaktors kann der Reaktor aus vertikal verlaufenden Rohren aufgebaut werden, die mittels Rohrkrümmern verbunden sind. Der gesamte Reaktor besteht auch hier aus Rohren gleichen Durchmessers. Die Länge bei dieser Anordnung beträgt gleicherweise 15 - 150 m, die Gesamthöhe 5 - 20 m.

Die Strömungsgeschwindigkeit wird im Bereich von mehr als 3 m/sec, bevorzugt 4 - 7 m/sec, so eingestellt, dass die Phasengrenzfläche Gas/flüssig, wie sie sich an der Einleitungsstelle des Gases in das Rohrsystem ausgebildet hat, erhalten bleibt. Dies lässt sich am besten durch einen Handversuch feststellen.

Eine weitere Vergrösserung der Phasengrenzfläche Gas/flüssig erbringt in dem so eingestellten Strömungszustand keine weitere Erhöhung der Umsatzraten. Die aufzuwendende Energie wird dann vollständig zur Beschleunigung der Stofftransportvorgänge in der Phasengrenzschicht flüssig/fest aufgebraucht.

Die notwendige Katalysatorkonzentration kann daher im Hydrierreaktor sehr klein gehalten werden; dies ist gerade bei Edelmetallkatalysatoren wesentlich. Die Konzentration des Palladium-Mohrs ist kleiner als 10 kg pro m³ Reaktionslosung, bevorzugt liegt sie zwischen 0,5 - 3 kg pro m³ Reaktionslösung. Die Hydrierung wird bei Temperaturen unter 100°C, bevorzugt bei 40 - 60°C, durchgeführt. Die Drucke sollen unter 15 bar, bevorzugt bei 2 - 5 bar, liegen.

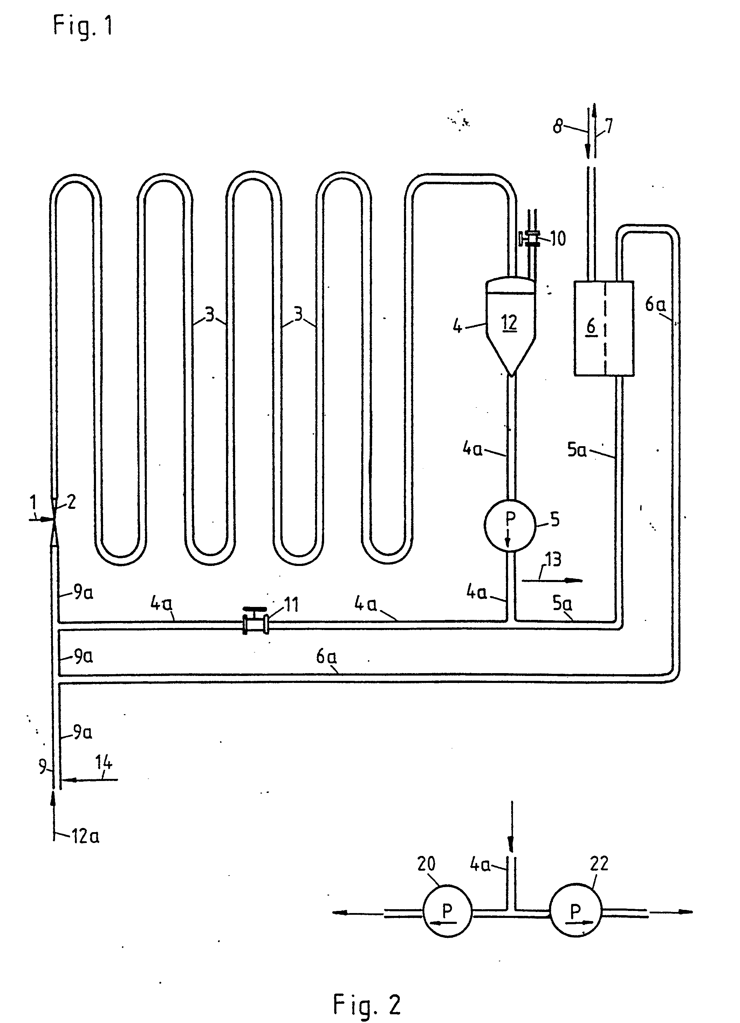

Im folgenden ist die Funktion des Reaktors anhand Abb. 1 beschrieben:

Von der Pumpenvorlage 4, die gleichzeitig als Gasabscheider dient, wird mittels einer Förderpumpe 5 die flüssige Phase 12 mit dem suspendierten Katalysator über die Leitungen 4a und 9a zur Gaseinleitstelle 2 organ 6 ebenfalls über Leitung 6a und 9a zur Gaseinleitstelle 2. Über eine Drosselklappe 11 wird eine Aufteilung der Mengenstrome geregelt. Diese Funktion kann auch durch zwei getrennte Pumpen ohne Drosselklappe durchgeführt werden (Abb. 2).

An der Gaseinleitstelle 2, die üblicherweise als Fritte, Sieb oder Düse, bevorzugt als Venturi-Düse, ausgeführt wird, wird die Gasphase 1 in die Flüssigphase dispergiert. Von hier strömt das Dreiphasengemisch über das Rohrsystem 3 wieder der Pumpenvorlage 4 zu. Im Rohrsystem reagiert die Gasphase bis auf den Inertgasanteil ab. Mittels eines Druckhalteventils 10 wird der Inertgasanteil aus dem Reaktionssystem ausgeschleust.

Mit Hilfe des Filterorgans 6 wird ein Teilstrom des Produkstromes 7 vom Katalysator befreit und abgeführt. Dieser abfiltrierte Produktstrom 7 wird bei Einleitstelle 9 durch frische katalysatorfreie Flüssigphase 12a ersetzt. Zur Regenerierung der Filterfläche in Organ 6 wird in bestimmten Zeitabständen das Filter mittels frischer oder bereits filtrierter Flüssigphase uber 8 rückgespült. Hierdurch wird ebenfalls der Katalysator im Umlauf gehalten. Ein Austausch des Katalysators während des Betriebes erfolgt bei Bedarf an den Einleitstellen 13 bzw. 14.

Das Reaktionsvolumen umfasst das Apparate-Volumen von der Einleitstelle 2 bis zum Eintritt in die Pumpenvorlage bzw. Gasabscheider 4.

**Beispiel**

In einem Reaktor, der nach DE-Patentschrift 15 42 089 mit dicken (abwärts) und dünnen (aufwärts) Rohren mit Durchmessern von 700 bzw. 350 mm konzlpiert war und ein Reaktionsvolumen von 18 m³ besaß, konnten pro Stunde max. 41 kmol Hydrochinon aus dem 2-Ethylanthrachinon gebildet erden. Die Stromungsgeschwindigkeit in den Rohren berug 0,72 m/s bzw. 2,9 m/s.

Durch den Austausch der dicken Rohre (Durchmesser 700 mm) gegen Rohre mit einem Durchmesser von 350 mm wurde das Reaktionsvolumen auf 9,1 m³ reduziert. Wegen der Vermeidung von Druckverlusten an den Rohrerweiterungen und Rohrverengungen konnte nun im neuen Reaktor bei gleicher Pumpenleistung eine Strdmungsgeschwindigkeit von 4,9 m/s der flüssigen Phase erreicht werden. Trotz des reduzierten Reaktionsvolumens auf 9,1 m konnten jedoch 45,5 kmol Hydrochinon gebildet werden.

Die Katalysatorkonzentration wurde unverändert bei 1,5 g Palladium pro Liter Arbeitslösung gehalten. Der Gesamt-2-Ethylanthrachinongehalt betrug 130 g Pro Liter Arbeitslösung.

Der Erfolg des erfindungsgemässen Verfahrens liegt vor allem in der erheblichen Verbesserung der Katalysatorproduktivität bei gegebener Katalysatorkonzentration, die zu höheren Raum-Zeitausbeuten führt. Hierdurch ist die Möglichkeit gegeben, eine vorgegebene Ausbeute in einem wesentlich kleineren Reaktionsvolumen zu erhalten, bzw. diese Ausbeute noch zu erhöhen trotz des verkleinerten Reaktionsvolumens. Automatisch treten durch das verkleinerte Reaktionsvolumen Einsparungen an Mengen der Arbeitslösung und am Katalysator auf. Es kommt hinzu, dass die Durchführung der Hydrierungselbst in grossem Maßstab, nicht durch ein Abreißen der Strömung beeinträchtigt wird.

Es war nicht vorherzusehen, dass die Verwendung eines Rohrreaktors mit Rohren gleicher Nennweite unter Einhalten einer bestimmten Mindestgeschwindigkeit zu einem derartigen Erfolg führen wurde. Vor allem, da die Verwendung von Rohrreaktoren zur Umsetzung von Gasen mit Flüssigkeiten wegen der ungenügenden Verteilung des Gases in der Flüssigkeit schon seit langem zu Schwierigkeiten geführt hatte.

Auch die Verwendung von Rohrreaktoren bei der Druckhydrierung, die entweder Rohre mit verschieden grossen Querschnitten besaßen oder in die kurze enge Rohrquerschnitte eingeschaltet waren, hatten keinen entscheidenden Einfluss auf die Gasverteilung an sich, siehe DE-Patentschrift 740 674.

### Patentansprüche

1) Kontinuierliches Gleichstromverfahren zur Durchführung der katalytischen Hydrierung mit Wasserstoff oder einem wasserstoffhaltigen Gas zur Herstellung von Wasserstoffperoxid im sog. Anthrachinonverfahren unter Verwendung von in der Arbeitslösung suspendiertem Palladium-Mohr bei Tempereturen unter 100°C und Drucken unter 15 bar absolut in einem als mäanderförmigem Rohrsystem ausgebildeten Reaktionsraum, dadurch gekennzeichnet, dass man die Hydrierung in einem Schlaufenreaktor aus Rohren gleicher Nennweite, die vertikal oder horizontal angeordnet und durch Rohrbögen verbunden sind, bei Strömungsgeschwindigkeiten in den Rohren von mehr als 3 m/sec, vornimmt.

2) Verfahren nach Anspruch 1, dadurch gekennzeichnet, dass bei Strömungsgeschwindigkeiten in den Rohren von 4- 7 m / sec gearbeitet wird.

3) Verfahren nach Anspruch 1 und 2, dadurch gekennzeichnet, dass die Konzentration des Palladium-Mohrs kleiner als 10 kg/m Reaktionslosung ist.

4) Verfahren nach Anspruch 1 bis 3, dadurch gekennzeichnet, dass die Konzentration des Palladium-Mohrs zwischen 0,5 bis 3 kg/m Reaktionslösung liegt.

### Claims

1. A continuous co-current process for carrying out catalytic hydrogenation with hydrogen or a hydrogencontaining gas for the production of hydrogen peroxide by the so-called anthraquinone process using palladium black suspended in the working solution at temperatures below 100°C and pressures below 15 bar absolute in a reaction chamber designed as a meandering pipe system, characterised in that hydrogenation is carried out in a loop reactor composed of tubes having an identical nominal width which are arranged vertically or horizontally and are connected by pipe bends at flow rates in the pipes higher than 3 m/sec.

2. A process according to Claim 1, characterised in that it is carried out at flow rates in the pipes of from 4 to 7 m/sec.

3. A process according to Claims 1 and 2, characterised in that the concentration of the palladium black is less than 10 kg/m of reaction solution.

4. A process according to Claims 1 to 3, characterised in that the concentration of the palladium black lies between 0.5 and 3 kg/m3 of reaction solution.

### Revendications

1.- Procédé se déroulant en continu en utilisant le courant continu pour réaliser l'hydrogénation catalytique de l'hydrogène ou bien avec un gaz contenant de l'hydrogène, afin de fabriquer du peroxyde d'hydrogène selon le procédé dit à l'anthraquinone en utilisant une carotte de palladium suspendue dans la solution opératoire à des températures inférieures à 100°C et des pressiona inférieures à 15 bars absolus dans une chambre de réaction revêtant la forme d'un système tubulaire en forme de méandres, procédé caractérisé en ce que l'on procède à l'hydrogénation dans un réacteur en boucle constitué de tubes de même diamètre interne, qui sont disposés verticalement ou bien horizontalement et qui sont réunis par des coudes tubulaires, pour des vitesses d'écoulement de plus de 3 mètres par seconde dans les tubes.

2.- Procédé selon la revendication 1, caractérisé en ce que l'on opère à des vitesses d'écoulement dans les tubes de 4 à 7 mètres par seconde.

3.- Procédé selon la revendication 1 et la revendication 2, caractérisé en ce que la concentration de la carotte de palladium est inférieure à 10 kg/m3 de solution de réaction.

4.- Procédé selon l'une des revendications 1 à 3, caractérisé en ce que la concentration de la carotte de palladium se situe entre 0,5 et 3 kg/m3 de la solution de réaction.

Fig. 1

Fig. 2